# EUROPEAN PATENT SPECIFICATION

(11) **EP 2 499 568 B1**
(45) Date of publication and mention of the grant of the patent: **05.03.2014**
(21) Application number: 10801566.0
(22) Date of filing: 30.11.2010
(51) Int. Cl.: G06F 9/30, G06F 11/00

(54) **TIMING ANALYSIS**
TIMING-ANALYSE
ANALYSE DE SYNCHRONISATION

(30) Priority: 01.12.2009 US 628706
(43) Date of publication of application: 19.09.2012
(73) Proprietor: Xmos Ltd, Bristol BS1 4PB (GB)
(72) Inventor: MAY, David, Michael, Bristol BS8 2EJ (GB); LAMBERTUS, Hendrik, Bristol BS7 8NJ (GB)
(74) Representative: Driver, Virginia Rozanne
(86) International application number: PCT/EP2010/068540
(87) International publication number: WO 2011/067254

(56) References cited:
- WO-A1-02/08894
- US-A- 5 581 794
- US-A1- 2005 235 355

## Description

### Field of the Invention

The present invention relates to analysing the timing of code to be executed on a processor.

### Background

A programmer may write a program that contains timing information. For instance, the programmer may specify that a *while* loop has to be executed at a certain-rate, e.g. 48 KHz. Another example would be that a certain data channel should carry some specified amount of data per unit time, say *N* bytes of data every *t* nanoseconds. Another example would be that an event or occurrence *A* has to happen within a specified time t nanoseconds of another event or occurrence *B*, or a point in the code should be reached within a specified time of another point in the code.

The programmer includes the timing information explicitly in a high-level programming language (e.g. in C++ or a variant). A compiler then takes the high-level program and generates corresponding low-level machine code for execution on a processor (this may optionally involve a separate assembler stage). Conventionally, the compiler will check that the code it generates will execute under the required real-time metrics by applying static analysis. Static analysis will, for example, resolve the following case.

```
 while 48 Khz (true) {
      o <: signal; // Output data.
      signal = signal * 3; // Compute new data.
      }
```

In this example, the program outputs a data value ("signal"), multiplies the value by three, then loops back to the beginning of the loop in order to output the new multiplied value, multiply it by three again and so on. It is possible for the compiler to reliably analyze the timing of this loop using static analysis, because there is no dependency involved and so the compiler can make a precise estimate of the time required to complete the loop.

On the other hand, in cases where the time taken is data dependent, static analysis may use a worst-case metric to try to determine a time for the loop. For example, data dependency may occur where the code takes an input from an external source such as a temperature sensor, and the behavior of the program depends on the data from that external source. One example would be as follows.

```
 while 48 Khz (true) {
      temperature_sensor :> signal; // Input data.
       if (signal < 16) X;
       if (signal. > 5) Y;
 }
```

In this piece of code, the program inputs a data value from a temperature sensor, tests whether the value is smaller than 16 and if so performs a function X, then tests whether the value is greater than 5 and if so performs a different function Y. The time taken for each loop therefore depends on the inputted data. In any given instance, the time for the loop could be the time taken for X, the time taken for Y, or the time taken for X followed by Y. The worst-case metric is the latter; and if the time taken for X followed by Y, plus the time taken for the other instructions in the loop, fit with the 48 KHz time requirement, then the compiler will 'pass' the loop. Otherwise the compiler will generate a warning to the programmer, or possibly generate an error which halts the compilation.

### Summary

A compiler using static timing analysis could 'reject' a program if the worst-case time does not fit. However, there are cases where the worst-case metric has no meaning, in that it represents a path through the code that, although logically possible, cannot happen because of patterns in the input data that are not known to the compiler. There may also be cases where the analysis by the compiler is too strict, e.g. where the pattern of input data in the worst-case scenario is statistically unlikely or would occur with a statistically tolerable frequency.

In order to accommodate such cases, one aspect of the present invention provides a compiler that can insert a run time check in the form of a "trap-if-late" instruction into the compiled program, to check at run-time whether timing constraints are met. Another aspect of the present invention provides a processor comprising logic configured to decode and execute an instruction set including the trap-if-late instruction.

More particularly, according to one aspect of the present invention there is provided a processor comprising: an execution unit arranged to execute a sequence of instructions each comprising a respective opcode; and a counter coupled to the execution unit and arranged to generate a periodically updated counter value during said execution; wherein the execution unit comprises logic configured to identify an opcode representing a trap-if-late instruction in said sequence , and in response to execute the trap-if-late instruction by comparing a target value to the counter value and generating an exception on condition that the counter value represents a time that is late relative to said target value.

In embodiments, said logic may be configured to determine the target value from an operand of said trap-if late instruction.

The identity of the counter may be implicit in the trap-if-late instruction. The trap- if-late instruction may have a single operand.

The counter may be arranged to generate a counter value representing time in discrete units of seconds or integer divisions of seconds.

Said logic may be configured to generate the exception at the point of execution of said trap-if-late instruction itself, on condition that the counter value represents a time that is late relative to said target value at that point of execution.

Said logic may be configured, in response to the trap-if-late instruction, to store said target value for subsequent comparison with the counter value, and to generate an exception at a later point in the code if a further operation has not been executed by that point, wherein the flow operation is one of: an input operation for capturing data from the exterior of the processor into a buffer of a port, or an output operation for supplying data in the buffer from the port to the exterior of the processor.

The trap-if-late instruction may be a set-port instruction which sets a time register of a port to said target value such that a transfer of data involving said port will occur at a time corresponding to the target value.

Said further operation may comprise an output of data from said port.

The execution unit may be configured to execute an instruction set which includes: a first trap-if-late instruction, and a second trap-if-late instruction of a different type to the first trap-if-late instruction and having a different opcode from the first trap-if-late instruction, wherein the second trap-if-late instruction may be a set-port instruction which sets a time register of a port to said target value such that a transfer of data involving said port will occur at a time corresponding to the target value.

Said logic may be configured to perform said comparison by means of an operation to determine whether the counter value is greater than said target value.

Alternatively, said logic may be configured to perform said comparison by means of an operation to determine whether a signed difference between the counter value and the operand is greater than zero.

The processor may comprise a debugging port, wherein the processor may be arranged to output an indication of the exception via the debugging port, e.g. for detection at a separate computer terminal coupled to the debugging port.

According to another aspect of the present invention there may be provided a compiler product embodied on a computer-readable medium, the compiler being configured so as when run on a computer terminal to: receive higher-level code, and compile the high-level code to generate lower-level code; identify a timing constraint in said higher-level code; and in response to the identification of said timing constraint, insert a trap-if-late instruction into the lower-level code, the trap-if-late instruction comprising an opcode identifying the instruction as a trap-if-late instruction, the opcode being configured to operate an execution unit of a target processor to compare a target value to the counter value and generate an exception on condition that the counter value represents a time that is late relative to said target value.

In embodiments, the compiler may be configured to identify a timing constraint explicitly specified in the high-level code by a programmer, and to insert said trap-if-late instruction in response to the explicit timing constraint.

The compiler may be configured to detect whether a portion of said higher-level code qualified by said timing constraint is dependent on non-deterministic data, and to insert the trap-if-late instruction on condition of detecting that the portion is dependent on non-deterministic data.

According to further aspects of the invention, there may be provided a method of compiling and executing a program comprising trap-if-late instructions; and a system comprising a processor, test platform and host terminal for detecting exceptions generated by trap-if-late instructions.

In embodiments, the method or system may comprise steps or features in accordance with any of the above processor or compiler features.

### Brief Description of the Drawings

For a better understanding of the present invention and to show how it may be carried into effect, reference is now made by way of example to the accompanying drawings in which:
Figure 1a is a schematic block diagram of a system comprising a target processor, test platform and host terminal,
Figure 1b is a schematic representation of a machine code instruction loaded into an instruction register, and
Figure 2 is a schematic illustration of a processor of generating an executable program from source code.

### Detailed Description of Preferred Embodiments

According to preferred embodiments, the present invention provides a mechanism that enables the system designer to observe whether real time deadlines are met. The system designer can, on certain instructions, pass a target counter value (e.g. a time) to the instruction, and the instruction will trap if this target is late relative to some global counter (e.g. a wall clock).

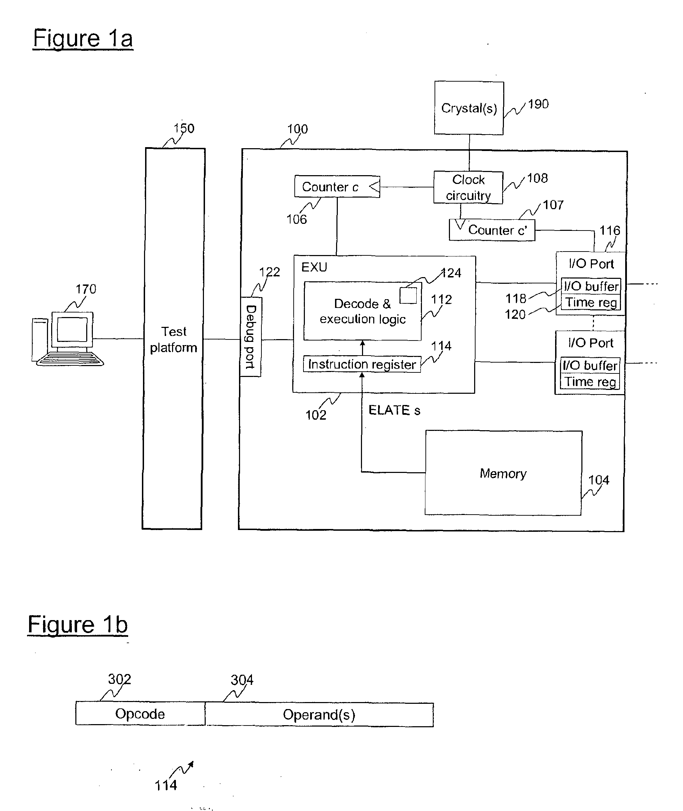

Figure 1a is a schematic block diagram showing a system comprising a target processor 100, a test platform 150 and host computer terminal 170 according to an exemplary implementation of the present invention. The processor 100 comprises a debugging port 122 such as a JTAG (Joint Test Action Group) port. The debugging port 122 is coupled to the test platform 170, which is a unit into which the target processor 100 may be plugged or physically inserted. The test platform 170 comprises a complementary JTAG port or other debugging port, a computer port such as a USB (Universal Serial Bus) port, and a converter for converting between the JTAG and USB protocols or between other such protocols for the debugging and computer ports. The host terminal 170 is coupled to the USB port of the test platform 170 and thereby arranged to communicate with the target processor 100. The host terminal 170 is installed with compiler, assembler and linker software for generating executable machine code and downloading the executable code via the test platform 150 to the processor 100 for execution; and debugging software for receiving debugging information back from the target processor 100 via the test platform.

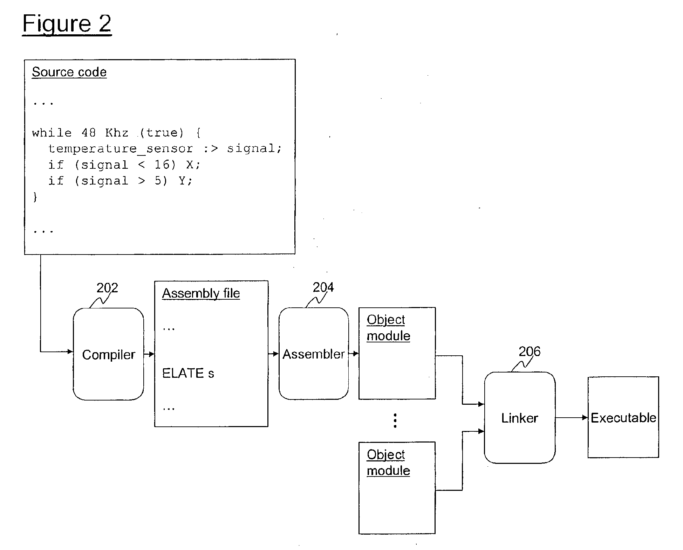

Figure 2 schematically illustrates the compiler 202, assembler 204 and linker 206 as installed and run on the host terminal 170. In operation, the compiler 202 receives a file of source code written in a high-level language such as C++, and compiles it to generate an assembly file comprising lower-level assembly code. The compiler 202 may also insert additional linker information for use by a linker. The assembler 204 receives the assembly file from the compiler 202 and generates an object module. The object module comprises executable binary machine code, plus any additional linker information generated by the compiler 202. Alternatively the compiler 202 may output the object file directly without a separate assembly stage. The linker 206 receives the object file plus any other relevant object files required to form the final program, and uses the additional linker information to combine the object modules into a single executable file of binary machine code. For short programs, it is possible that no linking is required and the executable program is formed of a single object.

The compiler 202 is configured to determine where timing constrains occur within the source code. These are preferably timing constraints that are explicitly defined by the programmer using the high-level source code language, such as the "while 48Hz" loop in the above examples. However, the possibility of detecting implicit or pre-determined timing constraints is not excluded.

Instead of relying on static analysis which tries to predict in advance whether timing constraints will be met without actually executing the program, according to preferred embodiments of the present invention the compiler 202 may insert "trap-if-late" instructions into the assembly file (or object file or executable if compiled directly). The trap-if-late instruction generates an exception *at run time* on condition that a timing constraint is not actually met during actual execution of the program, allowing for a dynamic checking of the program's timing requirements. This may be used in addition or as an alternative to static analysis. The trap-if-late instruction may be referred to herein as an ELATE instruction.

The ELATE instruction preferably has a single argument, s, which is a target time for the program at which the ELATE occurs. The argument s is compared against a wall clock c, and the processor 100 raises an exception if the current time at that point in the execution of the program is after s. The action of the ELATE instruction on the processor 100 will be discussed in more detail shortly.

In particularly preferred embodiments, the compiler 202 may be configured to analyse the portion of code qualified by the timing constraint in order to determine whether it is data dependent. That is, to determine whether the portion of code in question (the portion to which the timing restraint applies) is dependent on non-deterministic data which is input from or affected by any external or otherwise non-deterministic sources, such as the input from a temperature sensor in the second *while* loop example above. The compiler 202 may then only insert an ELATE instruction on condition that the qualified portion of code does contain a non-deterministic data dependency. If the qualified portion of code is purely deterministic on the other hand, e.g. in the first *while* loop example above, the compiler may assume that conventional static analysis is sufficient therefore not insert an ELATE. This advantageously avoids unnecessary extra machine code, which would increase the program's size and slow it down (potentially even causing the program to become late due to excessive ELATE instructions, when it might not have been late otherwise).

However, in alternative embodiments the compiler may insert ELATE instructions for non data dependent code as well. E.g. a cache miss could cause an unpredictable delay in an otherwise purely deterministic portion of code.

The action of the ELATE instruction on the target processor 100 is now discussed in more detail in relation to Figures 1a and 1b. The processor 100 comprises an execution unit 102, a memory 104 such as a flash memory or RAM coupled to the execution unit 102, a counter 106 having an output also coupled to the execution unit 102, and clock circuitry 108 coupled to a clock input of the counter 106. The execution unit 102 may be further coupled to the debug port 122. The execution unit 102 comprises an instruction register 114 coupled to the memory 104 via fetch circuitry (not shown), and decode and execution logic 112 coupled to the instruction register 114.

The clock circuitry 108 may comprise various components familiar to a person skilled in the art. For example, the clock circuitry would typically comprise a phase locked loop (PLL) arranged to generate a steady clock signal by reference to a reference oscillator 190, typically a crystal oscillator mounted on the same board as the processor chip 100. The reference oscillator frequency may be lower than the clock frequency to be generated, in which case the PLL multiples up the frequency.

The clock circuitry 108 may also comprise one or more clock dividers arranged to divide the master clock signal from the PLL and thus generate one or more other clock signals for clocking various different parts of the processor chip 100. The clock signal may be divided and/or branched multiple times throughout the chip 100.

The clock circuitry 108 is arranged to supply a periodic clock signal to the clock input of the counter 106, in the form of a regular alternating sequence of rising and falling logical transitions ("edges"). Whenever the clock input of the counter 106 detects one of the relevant edges of the clock signal (either a rising or filling edge), it is triggered to increment a counter value c held within the counter, thus representing an increase in time (a decrementing counter would also be an option in principle, although that would be less intuitive if the counter is to represent time). Thus the counter 106 provides a periodically updated measure of the passage of time, which is supplied to the execution unit 102. The counter 106 or its counter value c may be referred to herein as a "wall clock", i.e. a reference time.

The counter 106 preferably measures time in what may be referred to as "human time", i.e. in discrete units of seconds or some convenient integer division of seconds such as microseconds or nanoseconds. The crystal oscillator 190 used as a source for generating the clock signal which clocks the counter 108 may be the same crystal oscillator used as a source to generate the clock signal that clocks the execution unit 102 and other components on the processor 100. Such a crystal would typically have a frequency of the order of megahertz or gigahertz and may not have a period which multiplies conveniently to seconds or such like. In that case the clock circuitry 108 may require complex clock divider circuitry in order to clock the counter 106 in "human time", or otherwise the counter may simply measure time in a more convenient units relative to the processor clock speed, e.g. in processor cycles or multiples thereof. Alternatively, the clock circuitry 108 on some processors may be connected an additional crystal oscillator 190 specifically included for measuring human time. This second oscillator and associate clock circuitry is sometimes referred to as a "real-time clock" (RTC). Real-time reference oscillators typically have a frequency of an integer power of two oscillations per second, i.e. 2ⁿ oscillations per second where n is an integer, because this is most convenient for dividing down to a unit of one second. Most common is 32.786kHz, which is 2¹⁵ oscillations per second.

The execution unit 102 fetches a sequence of instructions in turn from the memory 104. Figure 1b illustrates schematically the format of an instruction, shown loaded into the instruction register 114. As shown in Figure 1b, each instruction comprises an opcode 302 and (for most types of instruction) one or more operands 304. The opcode identifies the type of the instruction, i.e. the type of the operation to be performed (e.g. ADD, SHIFT LEFT, GOTO, ELATE, etc.); and the operands indicate any relevant arguments of that instruction (e.g. the values on which to operate, or a destination register to store a result of the operation). An operand may be an immediate operand contained directly in the operand portion 304 of the instruction itself (i.e. the operand is the value of the argument), or may it be a specifier of a register containing a value for use in the operation (so that the operand specifies where to find the argument's value).

The decode and execution logic 112 is configured to read the opcode and any associated operands of an instruction from the instruction register 114, to decode their meaning, and to execute the instruction by performing the operation identified by the opcode using the argument or arguments indicated by the one or more operands.

The instruction set of a processor 100 refers to the set of instructions that its execution unit 102 is configured to recognise and execute. This is sometimes referred to as the "instruction set architecture", since it is an intrinsic property of the processor 100 itself: it is the set of the types and formats of machine code instruction that the processor is configured to recognise and act upon (as opposed to a program which is a sequence of instances of such instructions). For example, if the instruction register (and therefore each instruction) is sixteen bits long, and five of those bits are the opcode, then the excution unit 102 must comprise decoding logic which "knows" that, say, the opcode 01011 means ADD, the opcode 11010 means SHIFT LEFT, etc.; and also knows the format of the operand portions in the rest of each instruction and which operands they correspond to (e.g. source register, destination register, etc.). The execution uit must also comprise execution logic configured to act upon each decoded instruction by performing the corresponding operation. The instruction set architecture may be implemented in dedicated hardware logic in the execute and decode logic 112, or sometimes using a soft instruction set whereby the execute and decode logic 112 refers to a programmable look-up table.

Referring to the exemplary embodiment of Figure 1a, according to the present invention the execute and decode logic 112 of the execution unit 102 comprises a special instruction set architecture configured to recognise and act upon a special, dedicated "trap-if-late" instruction, ELATE, which is identified in the instruction set architecture by a specific combination of opcode bits. That is, the nature of the ELATE instruction is an intrinsic property of the processor's instruction set architecture (rather than being a function created by a programmer using multiple generic instructions from a conventional, generic instruction set).

As mentioned, the ELATE instruction preferably takes a single argument (indicated by a single opcode, which could be either an immediate operand containing the argument value directly or a register specifier identifying a register in which the argument value is stored). The argument s represents a target time relative to the counter value *c* by which the processor 100 should have reached the point in the code at which the ELATE instruction has been inserted. That is, the ELATE instruction detects whether the point in the program at which that single ELATE instruction itself occurs is late, and if so the exception is generated at the point of execution of the ELATE instruction. The identity of the counter 106 is preferably implicit in the ELATE instruction. "Implicit" in the context of an instruction set architecture means no operand required for that purpose. Thus the instruction format is:

### ELATE s

The execute and decode logic 112 contains special trap-if-late logic 124 configured to perform the "trap if late" operation using the argument s and implicitly the counter value c, as follows.

As mentioned, the argument s is compared against the wall clock *c*, and the processor raises an exception if the argument the current time is after s. The comparison is performed at the current time, at current point of execution in the code, thus enabling late timing problems to be trapped *at run-time.*

The "after" relationship may be dependent on the type and range of *s* and *c*. Note that on the mathematical domain of integers *c* > *s* ≡ (*c* - *s*) > 0. However, computer arithmetic typically uses a limited number of bits to represent a number in the range [-2ⁿ ... 2ⁿ - 1], in which case the above identity does not hold, and hence a decision has to be made as to whether to use the left form (*c* > *s*) or the right form (*c* - *s* > 0).

If *s* and *c* can represent a large values such as hundreds of years for example, then the after relationship is preferably defined as a "greater than" operation, i.e. *c* > *s*. Two examples of this are a 64-bit timer that counts nanoseconds, or a 32-bit counter that counts seconds.

If s and c cannot represent a large value on the other hand, and *c* has the potential to wrap around, then the "after" relationship is preferably defined instead as the signed difference being greater than zero, i.e. (*c* - *s*) > 0. An example of this is a 32-bit counter that counts nanoseconds, which will wrap around every four seconds.

A trap is an exception that is raised synchronously with the execution of the code, as opposed to something generated in response to an asynchronous event such as an external interrupt. When an ELATE instruction determines that its point in the code is late, then depending on the implementation of the present invention there may be a number of different options for trap handler actions.

For example, the trap-if-late logic 124 could be configured to branch to some predetermined exception handling routine. The exception handling routine may for example output a signal indicating the exception to the host terminal 117 via the debug port 122 and test platform 150; or may take steps to address the timing problem, e.g. by prioritising the scheduling of the late procedure in a real-time operating system (RTOS) scenario. Alternatively, the trap-if-late logic 124 could contain dedicated hardware for handling the exception, e.g. which is configured to output a signal indicating the exception directly from the debug port 122, or perhaps even halts execution.

In a particularly preferred embodiment, the trap-if-late logic 124 is configured to save the current program state upon raising an exception before branching to an exception handling routine, so that that the program state can be restored again once the trap handling routine has completed. Such program state information could include for example a program counter, global pool pointer, data pointer, stack pointer and/or link register, etc. In a multi-threaded environment, the program state could also include status register values for individual threads, e.g. which record whether each thread is enabled to respond to external events.

In further embodiments of the present invention, the instruction set architecture may alternatively or additionally be configured to decode and execute another type of trap-if-late instruction which may be referred to herein as a "set port" instruction or SETPT. It takes two arguments as follows.

### SETPT r, s

Referring again to Figure 1a, the processor 100 may comprise one or more Input & Output (I/O) ports 116. Each port 116 has a respective I/O buffer 118 and a trigger time register 120 associated with it. Each port 116 is also coupled to the output of the counter 106, and comprises logic configured to detect when the counter value c matches the trigger time value. When the match is detected, and the port is suitably set, the port will be triggered to perform either an input or an output operation. In the case of an input operation, this means capturing data from the exterior of the processor 100 into the I/O buffer 118 of the port 116, and in the case of an output operation this means supplying data in the I/O buffer 118 from the port 116 to the exterior of the processor 100.

Note that in embodiments, there may be provided additional counter circuitry 107 for supplying different counter values to a port 116 than supplied to the execution unit 102, such that the value c' used by the SETPT instruction is not necessarily the same value c used by the ELATE instruction. The additional counter may be clocked by a different clock signal than the wall clock counter 106 (the clock circuitry 108 may contain multiple PLLs and/or dividers, or be connected to multiple crystals 190, for generating different clock signals for supply to different parts of the chip 100). In particularly preferred embodiments, there may be provided circuitry for assigning different counter values to different ports.

The SETPT instruction sets the trigger time register 120 of a port 116 identified by the first argument r to the value of the second argument *s*. This means that the next I/O operation will be triggered to occur at time s, relative to the clock *c*' supplied to port *r*.

Furthermore, the trap-if-late logic 124 is configured, when executing the SETPT instruction, to raise an exception if the counter value *c*' associated with the port 116 identified by the first argument *r* has already gone beyond the time indicated by the second argument *s*.

The SETPT instruction described above is similar to the ELATE instruction in that it detects whether the point in the program at which that instruction itself occurs is late.

However, in embodiments, an alternative or additional action may be associated with the SETPT instruction (and or with a further type of trap-if-late instruction). That is, the trap-if-late logic 124 may alternatively or additionally be configured to store the argument *s* of a trap-if-late instruction such as SETPT in a deadline register (not shown) in the trap-if-late logic 124, in order to set up a stored target time value which is then compared to the counter *c*' *at a later point in the code.* That is, even if the current time *c*' is not late compared to s at the time of execution of the SETPT, then the trap-if-late logic may be configured to continue to compare the stored time *s* with the counter *c*' while the rest of the program continues to run, and to raise an exception at the stored target time *s* if an output from the relevant port *r* has not been performed by that stored target time *s*. In that case, an output instruction of the form:

### OUT r, d

would also have a special function of clearing the deadline register (or clearing an associated flag). Alternatively, the trap-if-late logic 124 could be configured to act on the OUT instruction itself, to perform the comparison between *c*' and *s* in response to executing the OUT so as to generate the exception (if warranted) at the point of execution of the attempted OUT instruction.

It will be appreciated that the above embodiments have been described only by way of example.

For instance, in embodiments the execution logic determines whether the counter value c is after than the argument s. However, it will be appreciated that a less preferred variant (requiring slightly more logic) would be to generate an exception if the counter value c is *on or after the* argument *s* (i.e. such that the argument represents a time at which it would already be too late). For the avoidance of doubt it will be noted that either case could fall under wording such as "generating an exception on condition that the counter value represents a time that is late relative to said argument value."

Further, the invention is not limited to use in a development environment with a test platform 150 and host terminal 150. The present invention could also be used "in the field" to generate exceptions in a real-life user application, to resort to some exception handling routine if a part of the program was running too slowly during use by the user.

Other applications and configurations of the present invention may be apparent to a person skilled in the art given the disclosure herein. The present invention is not limited by the described embodiments, but only by the appendant claims.

## Claims

1. A processor comprising:
an execution unit arranged to execute a sequence of instructions each comprising a respective opcode; and
a counter coupled to the execution unit and arranged to generate a periodically updated counter value during said execution;
wherein the execution unit comprises logic configured to identify an opcode representing a trap-if-late instruction in said sequence , and in response to execute the trap-if-late instruction by comparing a target value to the counter value and generating an exception on condition that the counter value represents a time that is late relative to said target value.

2. The processor of claim 1, wherein said logic is configured to determine the target value from an operand of said trap-if late instruction.

3. The processor of claim 1 or 2, wherein the identity of the counter is implicit in the trap-if-late instruction.

4. The processor of claim 2 and 3, wherein the trap-if-late instruction has a single operand.

5. The processor of any preceding claim, wherein the counter is arranged to generate a counter value representing time in discrete units of seconds or integer divisions of seconds.

6. The processor of any preceding claim, wherein said logic is configured to generate the exception at the point of execution of said trap-if-late instruction itself, on condition that the counter value represents a time that is late relative to said target value at that point of execution.

7. The processor of claims 1, 2 or 3, wherein said logic is configured, in response to the trap-if-late instruction, to store said target value for subsequent comparison with the counter value, and to generate an exception at a later point in the code if a further operation has not been executed by that point, wherein the flow operation is one of: an input operation for capturing data from the exterior of the processor into a buffer of a port, or an output operation for supplying data in the buffer from the port to the exterior of the processor.

8. The processor of claims 1, 2 or 3, wherein the trap-if-late instruction is a set-port instruction which sets a time register of a port to said target value such that a transfer of data involving said port will occur at a time corresponding to the target value.

9. The processor of claim 7 and 8, wherein said further operation comprises an output of data from said port.

10. The processor of any preceding claim, wherein the execution unit is configured to execute an instruction set which includes:
a first trap-if-late instruction, and
a second trap-if-late instruction of a different type to the first trap-if-late instruction and having a different opcode from the first trap-if-late instruction, wherein the second trap-if-late instruction is a set-port instruction which sets a time register of a port to said target value such that a transfer of data involving said port will occur at a time corresponding to the target value.

11. The processor of any preceding claim, wherein said logic is configured to perform said comparison by determining whether the counter value is greater than said target value.

12. The processor of any of claims 1 to 10, wherein said logic is configured to perform said comparison by determining whether a signed difference between the counter value and the operand is greater than zero.

13. The processor of any preceding claim, comprising a debugging port, wherein the processor is arranged to output an indication of the exception via the debugging port.

14. A system comprising the processor according to claim 13 and a separate computer terminal, wherein the computer terminal is coupled to said debugging output and arranged to detect said exception.

15. A system comprising: a processor according to any preceding claim, and a separate computer terminal for generating said sequence of instructions for execution on said processor; wherein the computer terminal comprise a compiler configured to:
generate said sequence of instructions from higher-level code;
to identify a timing constraint in said higher-level code; and
in response to the identification of said timing constraint to insert said trap-if-late instruction into the sequence.

16. A compiler product embodied on a computer-readable medium, the compiler being configured so as when run on a computer terminal to:
receive higher-level code, and compile the high-level code to generate lower-level code;
identify a timing constraint in said higher-level code; and
in response to the identification of said timing constraint, insert a trap-if-late instruction into the lower-level code, the trap-if-late instruction comprising an opcode identifying the instruction as a trap-if-late instruction, the opcode being configured to operate an execution unit of a target processor to compare a target value to the counter value and generate an exception on condition that the counter value represents a time that is late relative to said target value.

17. The compiler product of claim 16, wherein the compiler is configured to identify a timing constraint explicitly specified in the high-level code by a programmer, and to insert said trap-if-late instruction in response to the explicit timing constraint.

18. The compiler product of claim 16 or 17, wherein the compiler is configured to detect whether a portion of said higher-level code qualified by said timing constraint is dependent on non-deterministic data, and to insert the trap-if-late instruction on condition of detecting that the portion is dependent on non-deterministic data.

## Patentansprüche

1. Ein Prozessor, der Folgendes umfasst:
eine Ausführungseinheit, die zur Ausführung einer Sequenz von Befehlen angeordnet ist, wobei jeder Befehl einen einschlägigen Befehlscode enthält; und
einen an die Ausführungseinheit gekoppelten Zähler, der zum Generieren eines regelmäßig aktualisierten Zählerwerts während besagter Ausführung vorgesehen ist;
wobei die Ausführungseinheit Logik enthält, die zum Identifizieren eines Befehlscodes konfiguriert ist, der den Befehl "Trap-if-late" (auffangen, falls verspätet) in besagter Sequenz enthält, um in Reaktion darauf den Trap-if-late-Befehl durch Vergleichen eines Zielwerts mit dem Zählerwert auszuführen und eine Ausnahme unter der Bedingung zu generieren, dass der Zählerwert einen im Verhältnis zum besagten Zielwert späten Zeitpunkt darstellt.

2. Der Anspruch 1 entsprechende Prozessor, dessen besagte Logik konfiguriert ist, um den Zielwert von einem Operand des besagten Trap-if-late-Befehls zu bestimmen.

3. Der Anspruch 1 oder 2 entsprechende Prozessor, bei welchem die Identität des Zählers im Trap-if-late-Befehl eingeschlossen ist.

4. Der Anspruch 2 und 3 entsprechende Prozessor, dessen Trap-if-late-Befehl einen einzigen Operand hat.

5. Der einem vorstehenden Anspruch entsprechende Prozessor, bei welchem der Zähler zum Generieren eines Zählerwerts angeordnet ist, der die Zeit in diskreten Einheiten von Sekunden oder Ganzzahl-Divisionen von Sekunden darstellt.

6. Der einem vorstehenden Anspruch entsprechende Prozessor, dessen besagte Logik konfiguriert ist, um die Ausnahme am Ausführungspunkt des besagten, eigentlichen Trap-if-late-Befehls unter der Bedingung zu generieren, dass der Zählerwert einen im Verhältnis zum besagten Zielwert an diesem Ausführungspunkt späten Zeitpunkt darstellt.

7. Der Ansprüchen 1, 2 oder 3 entsprechende Prozessor, dessen besagte Logik konfiguriert ist, um besagten Zielwert für einen nachfolgenden Vergleich mit dem Zählerwert in Reaktion auf den Trap-if-late-Befehl zu speichern und im Code an einem späteren Punkt eine Ausnahme zu generieren, falls bis zu jenem Punkt kein weiterer Betrieb ausgeführt worden ist, wobei es sich beim Durchflussbetrieb um einen der folgenden handelt: einen Eingabebetrieb, um Daten vom Außenbereich des Prozessors in einem Puffer eines Ports zu erfassen, oder um einen Ausgabebetrieb, um Daten im Puffer vom Port zum Außenbereich des Prozessors zu übermitteln.

8. Der Ansprüchen 1, 2 oder 3 entsprechende Prozessor, bei welchem der Trap-if-late-Befehl ein Porteinstell-Befehl ist, der ein Zeitregister eines Ports derart auf besagten Zielwert einstellt, damit eine den besagten Port involvierende Datenübermittlung zu einer Zeit stattfindet, die dem Zielwert entspricht.

9. Der Anspruch 7 und 8 entsprechende Prozessor, bei welchem der besagte weitere Betrieb eine Ausgabe von Daten von besagtem Port umfasst.

10. Der einem vorstehenden Anspruch entsprechende Prozessor, dessen Ausführungseinheit zum Ausführen eines Befehlssatzes konfiguriert ist, der Folgendes umfasst:
einen ersten Trap-if-late-Befehl, und
einen zweiten Trap-if-late-Befehl von anderer Art als der erste Trap-if-late-Befehl, sowie mit einem anderen Befehlscode als der erste Trap-if-late-Befehl, wobei der zweite Trap-if-late-Befehl ein Porteinstellbefehl ist, der ein Zeitregister eines Ports derart auf besagten Zielwert einstellt, damit eine den besagten Port involvierende Datenübermittlung zu einer Zeit stattfindet, die dem Zielwert entspricht.

11. Der einem vorstehenden Anspruch entsprechende Prozessor, dessen besagte Logik zum Ausführen besagten Vergleichs konfiguriert ist, indem festgestellt wird, ob der Zählerwert größer als besagter Zielwert ist.

12. Der einem der Ansprüche 1 bis 10 entsprechende Prozessor, dessen besagte Logik zum Ausführen besagten Vergleichs konfiguriert ist, indem festgestellt wird, ob ein signierter Unterschied zwischen dem Zählerwert und dem Operand größer als Null ist.

13. Der einem vorstehenden Anspruch entsprechende Prozessor, der einen Debugging-Port umfasst, wobei der Prozessor angeordnet ist, um über den Debugging-Port einen Hinweis auf die Ausnahme auszugeben.

14. Ein System, das den Anspruch 13 entsprechenden Prozessor und ein separates Computer-Terminal umfasst, wobei das Computer-Terminal an besagten Debugging-Ausgang gekoppelt und zum Feststellen besagter Ausnahme angeordnet ist.

15. Ein System, das Folgendes umfasst: einen einem vorstehenden Anspruch entsprechenden Prozessor und ein separates Computer-Terminal zum Generieren der besagten Befehlssequenz, die auf besagtem Prozessor auszuführen ist; wobei das Computer-Terminal einen Compiler umfasst, der konfiguriert ist, um:
besagte Befehlssequenz von einem übergeordneten Code zu generieren;
um eine Zeiteinschränkung in besagtem übergeordneten Code zu identifizieren; und
um in Reaktion auf die Identifizierung der besagten Zeiteinschränkung den besagten Trap-if-late-Befehl in die Sequenz einzufügen.

16. Ein Compiler-Produkt, das auf einem computerlesbaren Medium verkörpert ist, wobei der Compiler derart konfiguriert ist, um, wenn in Betrieb auf einem Computer-Terminal:
einen übergeordneten Code zu empfangen und den Hochsprachen-Code zum Generieren eines untergeordneten Codes zu kompilieren;
eine Zeiteinschränkung in besagtem übergeordneten Code zu identifizieren; und
in Reaktion auf die Identifizierung besagter Zeiteinschränkung einen Trap-if-late-Befehl in den untergeordneten Code einzufügen, wobei der Trap-if-late-Befehl einen Befehlscode umfasst, der den Befehl als einen Trap-if-late-Befehl identifiziert, und wobei der Befehlscode konfiguriert ist, um eine Ausführungseinheit eines Zielprozessors zu betreiben, damit ein Zielwert mit dem Zählerwert verglichen und eine Ausnahme unter der Bedingung generiert wird, dass der Zählerwert einen im Verhältnis zum besagten Zielwert späten Zeitpunkt darstellt.

17. Das Anspruch 16 entsprechende Compiler-Produkt, dessen Compiler konfiguriert ist, um eine Zeiteinschränkung zu identifizieren, die von einem Programmierer im Hochsprachen-Code explizit spezifiert worden ist, und um besagten Trap-if-late-Befehl in Reaktion auf die explizite Zeiteinschränkung einzufügen.

18. Das Anspruch 16 oder 17 entsprechende Compiler-Produkt, wobei der Compiler konfiguriert ist um festzustellen, ob Teil des besagten, durch besagte Zeiteinschränkung qualifizierten übergeordneten Codes von nicht-deterministischen Daten abhängig ist, sowie um den Trap-if-late-Befehl unter der Bedingung einzufügen, dass festgestellt wird, dass dieser Teil von nicht-deterministischen Daten abhängig ist.

## Revendications

1. Un processeur comprenant :
une unité d'exécution agencée pour exécuter une séquence d'instructions, les instructions comprenant chacune un code opération respectif ; et
un compteur couplé à l'unité d'exécution et agencé pour générer une valeur de compteur mise à jour de manière périodique au cours de ladite exécution ;
dans lequel l'unité d'exécution comprend de la logique configurée pour identifier un code opération qui représente une instruction de piégeage en cas de retard dans ladite séquence, et en réponse, exécuter l'instruction de piégeage en cas de retard en comparant une valeur cible à la valeur de compteur et en générant une exception si la valeur de compteur représente un temps qui est en retard par rapport à ladite valeur cible.

2. Le processeur de la revendication 1, dans lequel ladite logique est configurée pour déterminer la valeur cible à partir d'un opérande de ladite instruction de piégeage en cas de retard.

3. Le processeur des revendications 1 ou 2, dans lequel l'identité du compteur est implicite dans l'instruction de piégeage en cas de retard.

4. Le processeur des revendications 2 ou 3, dans lequel l'instruction de piégeage en cas de retard possède un opérande unique.

5. Le processeur de l'une quelconque des revendications précédentes, dans lequel le processeur est agencé pour générer une valeur de compteur représentant le temps en unités discrètes de secondes ou en divisions entières de secondes.

6. Le processeur de l'une quelconque des revendications précédentes, dans lequel ladite logique est configurée pour générer l'exception au point d'exécution de ladite instruction de piégeage en cas de retard elle-même, si la valeur de compteur représente un temps qui est en retard par rapport à ladite valeur cible à ce point d'exécution.

7. Le processeur des revendications 1, 2 ou 3, dans lequel ladite logique est configurée, en réponse à l'instruction de piégeage en cas de retard, pour stocker ladite valeur cible à une fin de comparaison ultérieure avec la valeur de compteur, et pour générer une exception plus tard dans le code si une opération supplémentaire n'a pas été exécutée à ce point, dans lequel l'opération de flux est une des suivantes : une opération d'entrée pour capturer des données de l'extérieur du processeur dans un tampon d'un port, ou une opération de sortie pour fournir des données dans le tampon à partir du port à l'extérieur du processeur.

8. Le processeur des revendications 1, 2 ou 3, dans lequel l'instruction de piégeage en cas de retard est une instruction de définition de port qui définit un registre temps d'un port à la dite valeur cible de telle façon qu'un transfert de données impliquant ledit port se produira à un temps correspondant à la valeur cible.

9. Le processeur des revendications 7 et 8, dans lequel ladite opération supplémentaire comprend une sortie de données dudit port.

10. Le processeur de l'une quelconque des revendications précédentes, dans lequel l'unité d'exécution est configurée pour exécuter un ensemble d'instructions qui comprend :
une première instruction de piégeage en cas de retard, et
une seconde instruction de piégeage en cas de retard d'un type différent de la première instruction de piégeage en cas de retard et possédant un code opération différent de la première instruction de piégeage en cas de retard, dans lequel la seconde instruction de piégeage en cas de retard est une instruction de définition de port qui définit un registre temps d'un port à ladite valeur cible de telle façon qu'un transfert de données impliquant ledit port se produira à un temps correspondant à la valeur cible.

11. Le processeur de l'une quelconque des revendications précédentes, dans lequel ladite logique est configurée pour effectuer ladite comparaison en déterminant si la valeur de compteur est supérieure à ladite valeur cible.

12. Le processeur de l'une quelconque des revendications de 1 à 10, dans lequel ladite logique est configurée pour effectuer ladite comparaison en déterminant si une différence affectée d'un signe entre la valeur de compteur et l'opérande est supérieure à zéro.

13. Le processeur de l'une quelconque des revendications précédentes, comprenant un port de débogage, dans lequel le processeur est agencé pour sortir une indication de l'exception via le port de débogage.

14. Un système comprenant le processeur selon la revendication 13 et un terminal d'ordinateur séparé, dans lequel le terminal d'ordinateur est couplé à ladite sortie de débogage et agencé pour détecter ladite exception.

15. Un système comprenant : un processeur selon l'une quelconque des revendications précédentes, et un terminal d'ordinateur séparé pour générer ladite séquence d'instructions pour une exécution sur ledit processeur ; dans lequel le terminal d'ordinateur comprend un compilateur configuré pour :
générer ladite séquence d'instructions à partir d'un code de niveau plus élevé ;
identifier une contrainte de synchronisation dans ledit code de niveau plus élevé ; et
en réponse à l'identification de ladite contrainte de synchronisation insérer ladite instruction de piégeage en cas de retard dans la séquence.

16. Un produit de compilateur incorporé sur un support pouvant être lu par ordinateur, le compilateur étant configuré de telle façon que, lors de son exécution sur un terminal d'ordinateur pour :
recevoir un code de niveau plus élevé, et compiler le code de niveau plus élevé pour générer un code de niveau moins élevé ;
identifier une contrainte de synchronisation dans ledit code de niveau plus élevé ; et
en réponse à l'identification de ladite contrainte de synchronisation, insérer ladite instruction de piégeage en cas de retard dans le code de niveau moins élevé, l'instruction de piégeage en cas de retard comprenant un code opération identifiant l'instruction comme une instruction de piégeage en cas de retard, le code opération étant configuré pour opérer une unité d'exécution d'un processeur cible pour comparer une valeur cible à la valeur de compteur et générer une exception si la valeur de compteur représente un temps qui est en retard par rapport à ladite valeur cible.

17. Le produit de compilateur de la revendication 16, dans lequel le compilateur est configuré pour identifier une contrainte de synchronisation spécifiée explicitement dans le code de niveau plus élevé par un programmateur, et pour insérer ladite instruction de piégeage en cas de retard en réponse à la contrainte de synchronisation explicite.

18. Le produit de compilateur des revendications 16 et 17, dans lequel le compilateur est configuré pour détecter si une partie dudit code de niveau plus élevé qualifiée par ladite contrainte de synchronisation dépend de données non-déterministes, et pour insérer l'instruction de piégeage en cas de retard sous réserve de détecter que la partie est dépendante de données non-déterministes.
